# EUROPÄISCHE PATENTSCHRIFT

(11) **EP 2 984 924 B1**
(45) Veröffentlichungstag und Bekanntmachung des Hinweises auf die Patenterteilung: **10.07.2019**
(21) Anmeldenummer: 15001966.9
(22) Anmeldetag: 01.07.2015
(51) Int. Cl.: A01K 1/00, A01K 1/02

(54) **SCHWENKMECHANISMUS**
SWIVEL MECHANISM
MÉCANISME DE PIVOTEMENT

(30) Priorität: 11.08.2014 DE 102014011655
(43) Veröffentlichungstag der Anmeldung: 17.02.2016
(73) Patentinhaber: Ingenieurbüro Agrar- und Energie GmbH, 04808 Wurzen (DE)
(72) Erfinder: Köppchen, Uwe, 04808 Wurzen (DE)
(74) Vertreter: Müller, Volkmar

(56) Entgegenhaltungen:
- EP-A2- 1 520 470
- DE-U- 7 409 700
- FR-A1- 2 206 901
- US-A1- 2008 236 502

## Beschreibung

Die Erfindung betrifft einen Schwenkmechanismus für Tierboxen, insbesondere Freilaufboxen für Schweine, insbesondere für Sauen und Ferkel, oder für Türen von Tiergehegen, Tierdurchgängen oder dgl.

Die FR 2 206 901 A1 offenbart eine Tor-Anordnung für die Behandlung von Vieh, insbesondere einer Kuh. Diese Anordnung besitzt einen Tor-Rahmen, welcher in eine Zaunlücke eingesetzt ist. Am senkrechten Scharnier des Tor-Rahmens ist ein Tor angeordnet, welches somit geschwenkt werden kann.

Für die Bedienung des Tors ist eine am Tor schwenkbar angeordnete Stange vorgesehen. Am Ende der Stange ist eine Absperrkette angeordnet, welche mit einer Sperrwand lösbar verbunden ist. Das Tor lässt sich teilweise verschwenken, jedoch nicht um 360°. Die Funktionalität einer Drehtür besitzt diese Tor-Anordnung konstruktionsbedingt nicht.

Die US 2008/236502 A1 offenbart einen mehrteiligen Treibgang zu einer Futtergrippe. An der Futtergrippe sind die Teile einer Anordnung hintereinander und jeweils zwei der benachbarten Teile schwenkbar miteinander (durch senkrechte Scharniere) verbunden. Bei dieser Anordnung lassen sich zwar benachbarten Teile verschwenken, wobei eine Sau nicht sicher fixiert werden kann. Die Funktionalität einer Drehtür besitzt diese Tor-Anordnung konstruktionsbedingt nicht, da primär keine Türfunktion beabsichtigt und konstruktiv realisiert ist.

Die DE 74 09 700 U offenbart einen Gitterkäfig für Abferkelbuchten, mit zwei auseinanderschwenkbaren, freitragenden Seitenteilen, die parallel zueinander und zwischen einem Trog angeordnet sind. Diese Anordnung, angeordnet (mit weiteren Teilen, beispielsweise einer Tür) als ein Parallelgram, darf entsprechend der dortigen Aufgabe nicht um seine trogseitige Basis schwenkbar sein, um im Sinne der dortigen Erfindung funktionieren zu können.

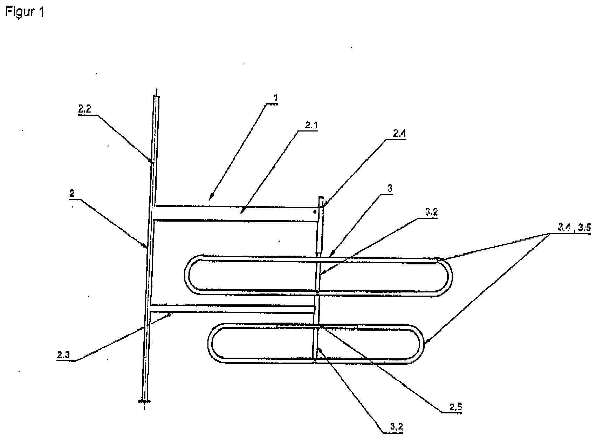

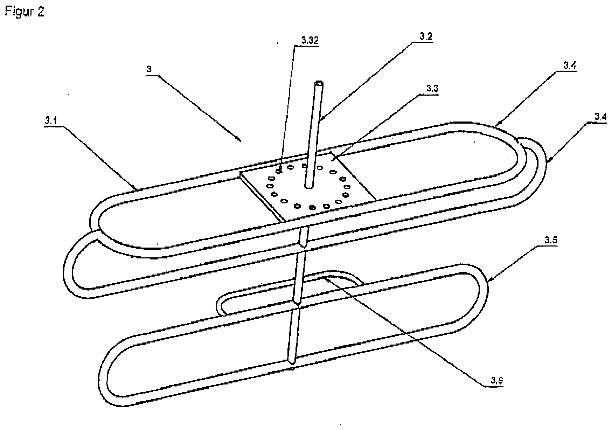

Dieser Gitterkäfig besitzt eine gesonderte Tür 4, welche für die Funktionalität des Gitterkäfigs eine Hilfsfunktion besitzt. Diese Tür 4, wie in Figur 1 und 2 ersichtlich, kann konstruktionsbedingt nicht die Funktionalität einer Drehtür besitzen.

Die EP 1 520 470 A2 offenbart eine rechteckige Abferkelbucht mit einem Sauenkäfig, welcher zwei gitterartig aufgebaute Seitenwände besitzt. Der Sauenkäfig kann geöffnet sein, wobei dann zumindest eine Seitenwand abspreizt, d.h. verschwenkt, ist. Der Sauenkäfig besitzt keine gesonderte Tür, sondern funktioniert in üblicher Art und Weise wie ein Käfig, welcher geschlossen den Austritt verwehrt und geöffnet den Zutritt oder Austritt ermöglicht.

Freilaufboxen für Schweine besitzen oft eine rechteckige Grundfläche, wobei diese durch diesbezüglich übliche Begrenzungen und/oder Türen abgegrenzt sind.

Freilaufboxen, welchen den derzeitigen Anforderungen des Tierwohls entsprechen, besitzen zumindest eine Mindestgrundfläche, beispielsweise in Deutschland eine Mindestgrundfläche von 6 m².

Außerdem wird diesbezüglich angestrebt, die Sauen nur so wenig wie möglich in ihrer Bewegungsfreiheit, insbesondere in räumlicher und/oder zeitlicher Hinsicht, beispielsweise während der Geburt der Ferkel, den ersten Tagen nach der Geburt der Ferkel, zum Zwecke der Reinigung oder des Zuganges des Tierarztes, einzuschränken. Dem Tierarzt muss beispielsweise ermöglicht sein, die Sau kurzfristig für eine Untersuchung oder Behandlung zu arretieren.

Diese Begrenzungen und/oder Türen der Tierboxen, insbesondere der Freilaufboxen für Schweine, müssen der Art gestaltet und dimensioniert sein, dass Personen vor aggressiven Tieren sicher geschützt sind, die Tiere sich nicht verletzen und die freilaufenden Tiere, ob Sau oder Ferkel, daran gehindert sind, die Bucht unerlaubt zu verlassen.

Die Handhabungen des Personals bezüglich dieser Schwenkmechanismen, wie Türen, sollen unter Nutzung nur einer Hand des Personals, einer sogenannte Einhandbedienung, erfolgen können.

D. h. insbesondere vom Personal mit einer Hand zu bewegen und/oder zu arretieren sind.

Ein solcher Schwenkmechanismus ist bisher aus dem Stand der Technik nicht bekannt; wird jedoch dringend benötigt.

Aufgabe der Erfindung ist es, einen Schwenkmechanismus bereitzustellen, welche vorgenannten Anforderungen erfüllt.

Die Aufgabe der Erfindung wird durch einen Schwenkmechanismus mit den Merkmalen gemäß Anspruch 1 gelöst.

Erfindungswesentlich ist, dass an der Drehachse 3.2 zwei Teile des Türelements 3.1 und bezogen auf die Längsachse der Drehachse 3.2 sich gegenüberliegend angeordnet sind, wobei jedes dieser beiden Teile des Türelementes 3.1 eine Ausdehnung besitzt, welche kleiner ist als der Abstand zwischen der Basisachse 2.2 und der Drehachse 3.2.

Der Aufbau dieses erfindungsgemäßen Schwenkmechanismus ist in technischer Hinsicht überraschend einfach und seine Bedienung und Manipulation kann vom Bedienpersonal mit einer Hand und ohne Verwendung von Werkzeugen erfolgen.

Der Befestigungsrahmen 2 kann im Sinne der Erfindung entweder nicht drehbar, wobei in diesem Fall der Ausleger 2.1 schwenkbar angeordnet ist, oder drehbar, wobei in diesem Fall der Ausleger 2.1 schwenkbar oder fest angeordnet ist, angeordnet sein.

Die Dimensionierung der Teile des Schwenkmechanismus und die Auswahl der eingesetzten Materialien erfolgt in üblicher Art und Weise unter Berücksichtigung der jeweiligen Erfordernisse, beispielsweise der jeweiligen Grundfläche der Tierbox.

Die Türelemente 3.1 besitzen einen diesbezüglich üblichen Aufbau, beispielsweise in offener und/oder geschlossener Bauweise.

Bei offener Bauweise kommen regelmäßig Gitterkonstruktionen, insbesondere unter Verwendung von Rohrmaterial, zum Einsatz.

Durch die gewählte Auswahl und Anordnung wird insbesondere erreicht, dass die Türelemente 3.1, auch im Zusammenspiel mit den anderen Teilen der Tierbox, insbesondere der Freilaufbox, das Personen vor aggressiven Tieren sicher geschützt, die Tiere sich nicht verletzen können und die freilaufenden Tiere, ob Sau oder Ferkel, daran gehindert sind, die Bucht unerlaubt zu verlassen.

Die abhängigen Ansprüche 2 bis 9 enthalten vorteilhafte Ausgestaltungen der Erfindung ohne diese damit zu begrenzen.

Bevorzugt ist, dass der Befestigungsrahmen 2 zumindest einen Führungsausleger 2.3 besitzt, an welchem der Türmechanismus 3 schwenkbar an gelenkt ist.

Bevorzugt ist außerdem, dass der Türmechanismus 3 eine Schwenkarretierung 3.3 besitzt.

Damit ist ermöglicht, dass in technisch einfacher Art und Weise die Sau sicher fixiert werden kann. Außerdem ist ermöglicht, dass die Sau S in einem bestimmten Bereich der Grundfläche abdrängbar ist, so dass der freigelegte Bereich beispielsweise vom Personal gereinigt werden kann.

Wird der Schwenkmechanismus primär in seiner Tor-Funktion genutzt, kann der Öffnungswinkel eingestellt werden, so dass beispielsweise nur die Ferkel oder eine Person die Tierbox, insbesondere die Freilaufbox, betreten oder verlassen können, ohne dass dies für die Sau auch gilt.

Die Aufgabe der Erfindung wird außerdem durch eine erfindungsgemäße Verwendung des Schwenkmechanismus mit den Merkmalen gemäß Anspruch 10 gelöst.

Der erfindungsgemäße Schwenkmechanismus kann der Schwenkmechanismus für eine Freilaufbox, eine Jungtieraufzuchtbox, nämlich für Ferkel, Kälber und junge Ziegen, oder einen Jungtierbehandlungsstand in der Massentierhaltung oder dem ökologischen Landbau eingesetzt werden.

Dabei erfolgt eine übliche Anpassung des Schwenkmechanismus an den jeweiligen Anwendungsfall an die Konstruktion, Dimensionierung und Materialauswahl.

Bevorzugt ist, dass zumindest zwei Schwenkmechanismen 1 angeordnet sind.

Durch den Einsatz von zwei Schwenkmechanismen 1 können beispielsweise die bisherigen Abferkelkäfige ersetzt werden.

Außerdem ist die Diagonalaufstellung für die Geburt ermöglicht.

Nach der Geburt ist die Längsaufstellung für das Säugen und Bewegen der Sau in der Freilaufbox ermöglicht. Besitzen die Ferkel nach einigen Tagen ihre volle Bewegungsaktivität können die zwei Schwenkmechanismen 1 an die Seite geklappt werden und es entsteht eine Freilaufzone in der Freilaufbucht.

Dies ist alles ohne aufwendigen Umbau und mit derselben technischen Grundausrüstung der Freilaufbox möglich, wobei die notwendigen Positionswechsel der Schwenkmechanismen 1 und deren Teile grundsätzlich im Einhandmodus bzw. Einhandbetrieb realisiert werden können.

Besitzt die Freilaufbox zwei Schwenkmechanismen 1 ergeben sich eine Reihe von unterschiedlichen Möglichkeiten für die Gestaltung der für das Tier, insbesondere Muttertier, beispielsweis einer Sau, zugänglichen Bereiche der Grundfläche der Tierbox bzw. der Nutzung der Tierbox.

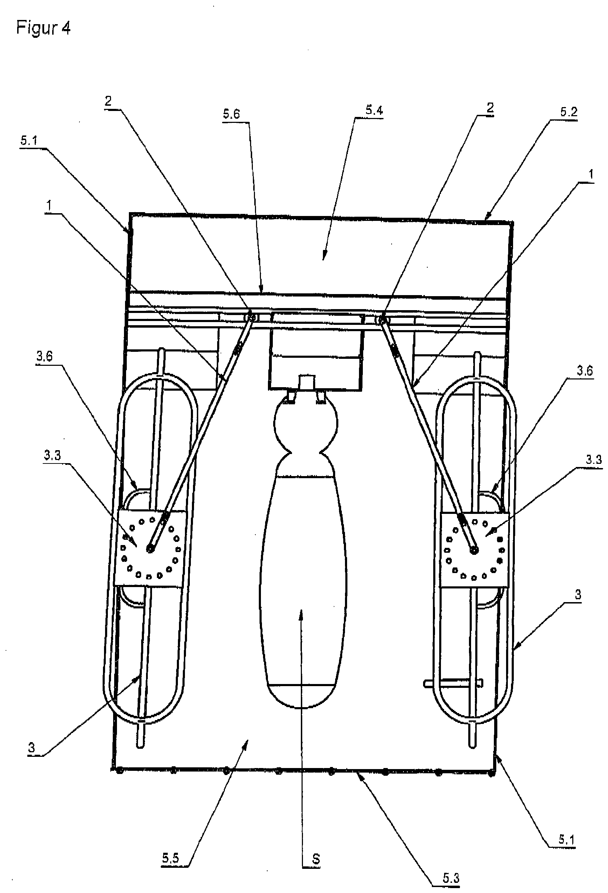

Sind die beiden Schwenkmechanismen 1 mit dem Türmechanismus parallel zur und an der Seitenwand 5.1 positioniert und die jeweiligen Schwenkarretierung 3.3 arretiert kann die Sau sich unbeschränkt in der Freilaufbox bewegen und die Freilaufbox ist in sich geschlossen, aber offen für die Sau (Fig. 4).

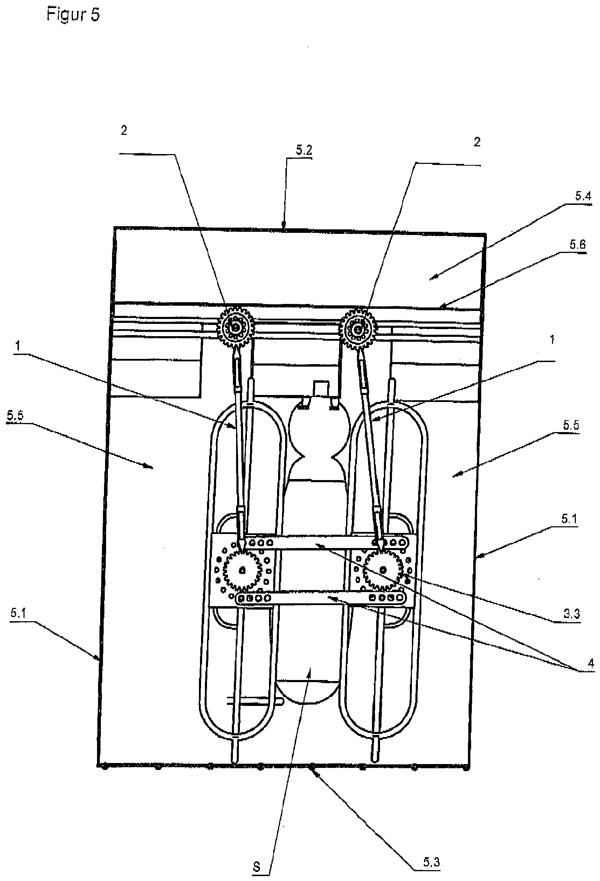

Sind die beiden Schwenkmechanismen 1 mit dem Türmechanismus parallel zur und an der stehenden Sau positioniert, die beiden Türmechanismen 1 miteinander verbunden und die jeweiligen Schwenkarretierung 3.3 nicht arretiert, kann die Sau sich in der Freilaufbox dennoch beschränkt bewegen. Die Sau ist somit gehindert, Ferkel an der Wand zu erdrücken, wenn sie sich auf den Boden legt. Damit kann die Gefahr, dass die Sau die jungen Ferkel, insbesondere beim Hinlegen drückt, wirkungsvoll gebannt werden (Fig. 5),

Sind die beiden Schwenkmechanismen 1 mit dem Türmechanismus diagonal bzw. angewinkelt zur und an der Seitenwand 5.1 und an der stehenden Sau positioniert, die beiden Türmechanismen 1 miteinander verbunden und die jeweiligen Schwenkarretierung 3.3 arretiert, steht die Sau diagonal fixiert in der Freilaufbox, d. h. es besteht eingeschränkte Bewegungsfreiheit. Diese Position kann beispielsweise vor und während der Geburt der Ferkel eingenommen werden.

Weitere Merkmale, Eigenschaften und Vorteile der vorliegenden Erfindung ergeben sich aus der nachfolgenden Beschreibung von Ausführungsbeispielen unter Bezugnahme auf die Figur 1 bis 7.

Es zeigen:
- Fig. 1: ein Ausführungsbeispiel eine Ausführungsform des Schwenkmechanismus in einer Seitenansicht,
- Fig. 2: eine Ausführungsform des Türmechanismus 3 in einer Seitenansicht,
- Fig. 3: ein Ausführungsbeispiel eine weitere Ausführungsform des Schwenkmechanismus in einer Seitenansicht als Türelement,
- Fig. 4: ein Ausführungsbeispiel einer Ausführungsform der Verwendung von zwei Schwenkmechanismen 1 für eine Freilaufbox, dargestellt in einer Draufsicht,
- Fig. 5: ein Ausführungsbeispiel einer weiteren Ausführungsform der Verwendung von zwei Schwenkmechanismen 1 für eine Freilaufbox, dargestellt in einer Draufsicht, als parallel bewegliche Freilaufbox,
- Fig. 6: ein Ausführungsbeispiel einer weiteren Ausführungsform der Verwendung von zwei Schwenkmechanismen 1 für eine Freilaufbox, dargestellt in einer Draufsicht, als Diagonalbox geführt und
- Fig. 7: ein Ausführungsbeispiel einer alternativen Ausführungsform des Schwenkmechanismus 1 in einer perspektivischen Seitenansicht.

Fig. 1 zeigt ein Ausführungsbeispiel einer Ausführungsform des Schwenkmechanismus 1 in einer Seitenansicht. Der Schwenkmechanismus zumindest umfasst einen Befestigungsrahmen 2 mit einer Basisachse 2.2 an welcher ein Ausleger 2.1 angeordnet ist, und ein Türmechanismus 3, welcher zumindest ein Türelement 3.1 mit einer Drehachse 3.2 besitzt, wobei diese Drehachse 3.2 parallel zur Basisachse 2.2 angeordnet ist. Der Türmechanismus 3 ist über die Drehachse 3.2 schwenkbar am Befestigungsrahmen 2 angeordnet.

Der Befestigungsrahmen 2 besitzt außerdem einen Führungsausleger 2.3, an welchem der Türmechanismus 3 schwenkbar über die Drehachse 3.2 an gelenkt ist.

Der Führungsausleger 2.3 besitzt eine Führungsöffnung 2.5 und der Ausleger 2.1 besitzt eine Öffnung 2.4, durch welche die Drehachse 3.2 des Türmechanismus 3 jeweils verläuft.

Fig. 2 zeigt eine mögliche Ausführungsform des Türmechanismus 3 in einer Seitenansicht. Der Türmechanismus 3 besitzt ein Türelement 3.1 mit einer Drehachse 3.2. Am Türmechanismus 3 eine Schwenkarretierung 3.3 angeordnet, hier in Form einer Lochscheibe 3.32 in welchen ein Arretierungshaken 3.31 eingesteckt werden kann(in Fig. 2 nicht dargestellt), so dass der Türmechanismus 3 in einer vorbestimmten Stellung stufenweise arretiert werden kann.

Alternativ können auch andere Arretierungen, welche das Verschwenken des Türmechanismus 3 in Bezug zum Befestigungsrahmen 2 bei Bedarf verhindert.

Diese Arretierungen, analog der Schwenkarretierung 3, können in üblicher Art und Weise ausgewählt und stufenlos oder stufenweise funktionsbedingt agieren.

Der Türmechanismus 3 besitzt ein Absperrelement 3,4, welches bevorzugt aus Rohrsegmenten 3.5, beispielsweise aus Edelstahlrohr, bestehend.

Am Türmechanismus 3, nämlich am unteren Absperrelement 3.4, ist ein Ferkelschutz 3.6, hier als Rohrbügel, angeordnet.

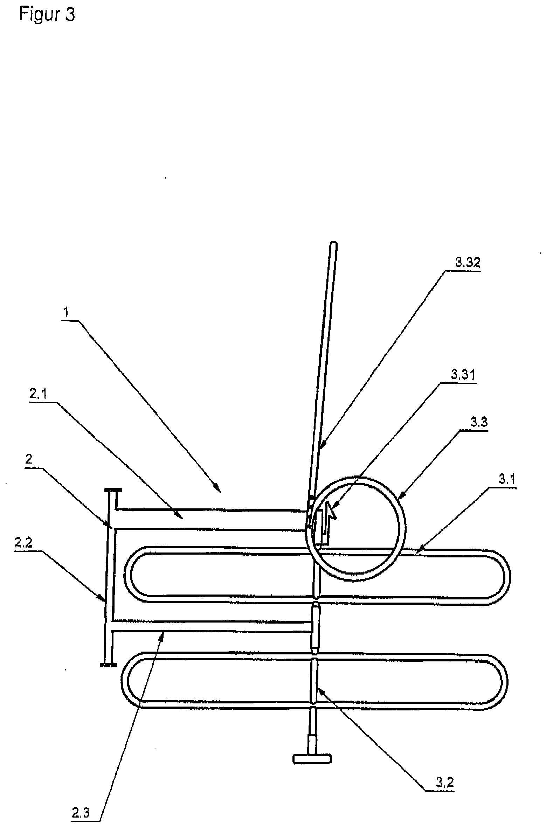

Fig. 3 zeigt ein Ausführungsbeispiel einer alternativen Ausführungsform des Schwenkmechanismus 1 in einer Seitenansicht.

Der Schwenkmechanismus 1 zumindest umfasst einen Befestigungsrahmen 2 mit einer Basisachse 2.2 an welcher ein Ausleger 2.1 angeordnet ist, und ein Türmechanismus 3, welcher zumindest ein Türelement 3.1 mit einer Drehachse 3,2 besitzt, wobei diese Drehachse 3.2 parallel zur Basisachse 2.2 angeordnet ist. Der Türmechanismus 3 ist über die Drehachse 3.2 schwenkbar am Befestigungsrahmen 2 angeordnet.

Der Befestigungsrahmen 2 besitzt außerdem einen Führungsausleger 2.3, an welchem der Türmechanismus 3 schwenkbar über die Drehachse 3.2 an gelenkt ist.

Der Führungsausleger 2.3 besitzt eine Führungsöffnung 2.5 und der Ausleger 2.1 besitzt eine Öffnung 2.4, durch welche die Drehachse 3.2 des Türmechanismus 3 jeweils verläuft.

Am Befestigungsrahmen 2 ist eine Schwenkarretierung 3.3 mit Arretierungshaken 3.31 angeordnet.

Der Arretierungshaken 3.31 befindet sich in Fig. 3 nicht im Eingriff mit der Lochleiste 3.32, d. h. das Türelement 3.1 ist um die Drehachse 3.2 verdrehbar, so dass beispielsweise ein Durchtritt ermöglicht wäre.

Fig. 4 zeigt ein Ausführungsbeispiel einer Ausführungsform der Verwendung von zwei Schwenkmechanismen 1 für eine Freilaufbox, dargestellt in einer Draufsicht.

Die dargestellte Freilaufbox besitzt eine rechteckige Grundfläche, beispielsweise von 2,1 m x 2,9m.

Die dargestellte Freilaufbox besitzt zwei Türseitenwände 5.1, eine Rückwand 5.2 und eine Stirnwand 5.3.

In die Türseitenwand 5.1 ist jeweils ein Schwenkmechanismen 1 integriert, wobei zumindest einer dieser die Funktion einer Freilaufboxtür erfüllt. Der Ferkelschutz 3.6, angeordnet am Türmechanismus 3, zeigt jeweils in Richtung der Türseitenwand 5.1. Im Bereich der Rückwand 5.2, bevorzugt parallel zur Rückwand 5.2, ist die Ferkelschutzzone 5.4, beispielsweise mit einer Breite von 2,1 m und einer Länge von 0,5m, angeordnet, wobei diese durch übliche Ferkelgitter 5.6 zur Freilaufzone 5.5 in üblicher Art und Weise abgetrennt ist. Die Ferkelschutzzone 5.4 kann die Sau S nicht betreten bzw. sich dort nicht hinlegen, so dass die Ferkel, in Fig. 4 nicht dargestellt, diesbezüglich sicher sind.

Im Bereich der Ferkelgitter 5.6 sind die beiden Befestigungsrahmen 2 senkrecht und von einander beabstandet, beispielsweise 80 cm beabstandet, angeordnet, und jeweils zumindest am Boden der Freilaufzone 5.5 in üblicher Art und Weise befestigt.

Dabei sind die beiden Schwenkmechanismen 1 mit dem Türmechanismus 3 in Fig. 4 parallel zur und an der Seitenwand 5.1 positioniert und die jeweiligen Schwenkarretierung 3.3 arretiert dargestellt. Bei dieser Positionierung der beiden Schwenkmechanismen 1 in der Freilaufbox kann die Sau S sich unbeschränkt in der Freilaufzone 5.5 der Freilaufbox bewegen, wobei die Freilaufbox geschlossen ist.

Fig. 5 zeigt ein Ausführungsbeispiel einer weiteren Ausführungsform der der Verwendung von zwei Schwenkmechanismen 1 für eine Freilaufbox.

Die dargestellte Freilaufbox besitzt eine rechteckige Grundfläche, beispielsweise von 2,1 m x 2,9m. Diese Grundfläche umfasst insbesondere die Ferkelschutzzone 5.4 und die Freilaufzone 5.5.

Die dargestellte Freilaufbox besitzt zwei Türseitenwände 5.1, eine Rückwand 5.2 und eine Stirnwand 5.3, welche die Grundfläche begrenzen.

Im Bereich der Rückwand 5.2, bevorzugt parallel zur Rückwand 5.2, ist die Ferkelschutzzone 5.4, beispielsweise mit einer Breite von 2,1 m und einer Länge von 0,5m, angeordnet, wobei diese durch übliche Ferkelgitter 5.6 zur Freilaufzone 5.5 in üblicher Art und Weise abgetrennt ist. Die Ferkel können das Ferkelgitter 5.6 passieren, die Sau S nicht. Die Ferkelschutzzone 5,4 kann die Sau S nicht betreten bzw. sich dort nicht hinlegen, so dass die Ferkel, in Fig. 5 nicht dargestellt, diesbezüglich sicher sind.

Im Bereich der Ferkelgitter 5.6 sind die beiden Befestigungsrahmen 2 senkrecht und von einander beabstandet, beispielsweise 80 cm beabstandet, angeordnet, und jeweils zumindest am Boden der Freilaufzone 5.5 in üblicher Art und Weise befestigt.

Sind die beiden Schwenkmechanismen 1 mit dem Türmechanismus 3 parallel zur und an der stehenden Sau S positioniert, die beiden Türmechanismen 3 miteinander durch zwei Verbindungselemente 4 verbunden und die jeweiligen Schwenkarretierung 3.3 nicht arretiert, kann die Sau S sich in der Freilaufbox dennoch beschränkt bewegen. Die Sau S ist somit nicht gehindert, sich auf den Boden zu legen. Damit kann die Gefahr, dass die Sau S die jungen Ferkel, insbesondere beim Hinlegen drückt, wirkungsvoll gebannt werden(Fig. 5).

Damit ist erstmals ermöglicht, dass die Sau S, eingesperrt zwischen den beiden Schwenkmechanismen 1, sich, insbesondere wie mit einem Parallelogramm, durch die Freilaufbox bewegen kann. Sozusagen ein "freilauffender" Kastenstand, der sich mit der Sau S mitbewegt.

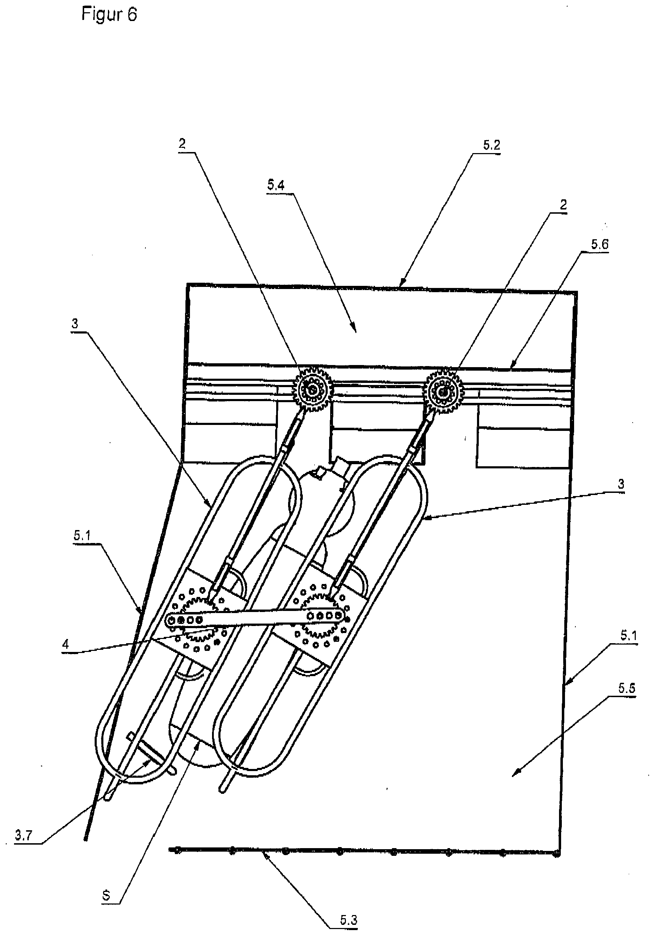

Fig. 6 zeigt ein Ausführungsbeispiel einer weiteren Ausführungsfonn der Verwendung von zwei Schwenkmechanismen 1 für eine Freilaufbox, dargestellt in einer Draufsicht.

Die dargestellte Freilaufbox besitzt eine rechteckige Grundfläche, beispielsweise von 2,1 m x 2,9 m.

Die dargestellte Freilaufbox besitzt zwei Türseitenwände 5.1, eine Rückwand 5.2 und eine Stirnwand 5.3.

Im Bereich der Rückwand 5.2, bevorzugt parallel zur Rückwand 5.2, ist die Ferkelschutzzone 5.4, beispielsweise mit einer Breite von 2,1 m und einer Länge von 0,5m, angeordnet, wobei diese durch übliche Ferkelgitter 5.6 zur Freilaufzone 5.5 in üblicher Art und Weise abgetrennt ist. Die Ferkelschutzzone 5.4 kann die Sau S nicht betreten bzw. sich dort nicht hinlegen, so dass die Ferkel diesbezüglich sicher sind.

Im Bereich der Ferkelgitter 5.6 sind die beiden Befestigungsrahmen 2 senkrecht und von einander beabstandet, beispielsweise 80 cm beabstandet, angeordnet, und jeweils zumindest am Boden der Freilaufzone 5.5 in üblicher Art und Weise befestigt.

Sind die beiden Schwenkmechanismen 1 mit dem Türmechanismus 3 diagonal bzw. angewinkelt zur und an der einen Seitenwand 5.1 und an der stehenden Sau S positioniert, die beiden Türmechanismen. 3 miteinander durch ein Verbindungselement 4 verbunden und die jeweiligen Schwenkarretierung 3.3 arretiert, steht die Sau S fixiert in der Freilaufbox, d. h. es besteht keine Bewegungsfreiheit. Diese Position kann beispielsweise vor und während der Geburt der Ferkel eingenommen werden.

Um hinter der Sau S einen ausreichenden Freiraum, insbesondere während der Geburt zu haben, kann ein verschwenkbares Abstandssegment 3.7 angeordnet sein.

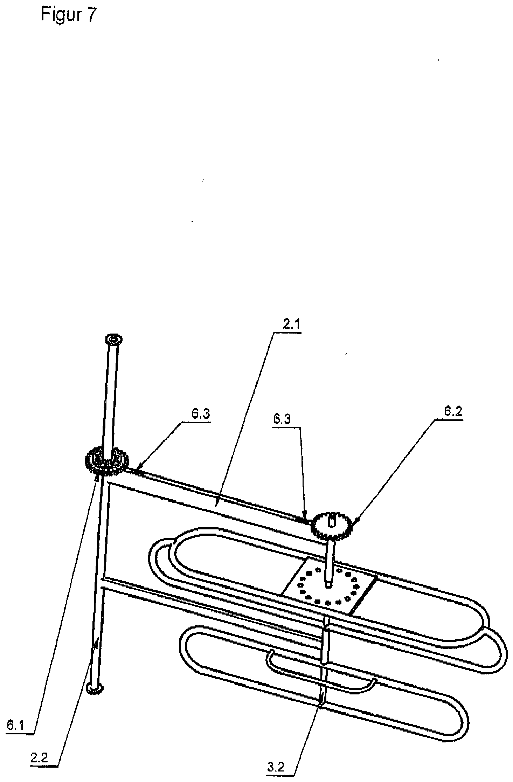

Fig. 7 zeigt ein Ausführungsbeispiel einer alternativen Ausführungsform des Schwenkmechanismus 1 in einer perspektivischen Seitenansicht.

Der Schwenkmechanismus zumindest umfasst einen Befestigungsrahmen 2 mit einer Basisachse 2.2 an welcher ein Ausleger 2.1 angeordnet ist, und ein Türmechanismus 3, welcher zumindest ein Türelement 3.1 mit einer Drehachse 3.2 besitzt, wobei diese Drehachse 3.2 parallel zur Basisachse 2.2 angeordnet ist. Der Türmechanismus 3 ist über die Drehachse 3.2 schwenkbar am Befestigungsrahmen 2 angeordnet.

Zur stufenweisen Arretierung wird eine Ratschenarretierung 6 verwendet. Diese besitzt einen Zahnkranz 6.1, durch welchen die Basisachse 2.2 verläuft, und einen Zahnkranz 6.2, durch welchen die Drehachse 3.2 verläuft. Zwischen dem Zahnkranz 6.1 und dem Zahnkranz 6.2 ist eine Verbindungsstange 6.3 angeordnet. An den beiden Enden der Verbindungsstange 6.4 ist jeweils ein Ratschenmechanismus 6.3 angeordnet.

### Liste der Bezugszeichen

- 1: Schwenkmechanismus
- 2: Befestigungsrahmen
- 2.1: Ausleger
- 2.2: Basisachse
- 2.3: Führungsausleger
- 2.4: Öffnung
- 2.5: Führungsöffnung

- 3: Türmechanismus
- 3.1: Türelement
- 3.2: Drehachse
- 3.3: Schwenkarretierung
- 3.31: Arretierungshaken
- 3.32: Lochscheibe
- 3.4: Absperrelement
- 3.5: Rohrsegmenten
- 3.6: Ferkelschutz
- 3.7: Abstandssegment

- 4: Verbindungselement

- 5: Grundfläche
- 5.1: Türseitenwand
- 5.2: Rückwand
- 5.3: Stirnwand
- 5.4: Ferkelschutzzone
- 5.5: Freilaufzone
- 5.6: Ferkelgitter
- 6.: Ratschenarretierung
- 6.1: Zahnkranz
- 6.2: Zahnkranz
- 6.3: Ratschenmechanismus

- S: Sau

## Patentansprüche

1. Schwenkmechanismus für Tierboxen, wobei dieser Schwenkmechanismus (1) zumindest umfasst einen Befestigungsrahmen (2) mit einer Basisachse (2.2) an welchem zumindest ein Ausleger (2.1) angeordnet ist, und ein Türmechanismus (3), welcher zumindest ein Türelement (3.1) mit einer Drehachse (3.2) besitzt, wobei diese Drehachse (3.2) parallel zur Basisachse (2.2) angeordnet ist, und der Türmechanismus (3) schwenkbar am Befestigungsrahmen (2) angeordnet ist, **dadurch gekennzeichnet, dass** an der Drehachse (3.2) zwei Teile des Türelements (3.1) und bezogen auf die Längsachse der Drehachse (3.2) sich gegenüberliegend angeordnet sind, wobei jedes dieser beiden Teile des Türelementes (3.1) eine Ausdehnung besitzt, welche kleiner ist als der Abstand zwischen der Basisachse (2.2) und der Drehachse (3.2).

2. Schwenkmechanismus gemäß Anspruch 1, **dadurch gekennzeichnet, dass** der Befestigungsrahmen (2) einen Führungsausleger (2.3) besitzt, an welchem der Türmechanismus (3) schwenkbar an gelenkt ist.

3. Schwenkmechanismus gemäß Anspruch 2, **dadurch gekennzeichnet, dass** der Führungsausleger (2.3) eine Führungsöffnung (2.5) besitzt, durch welche die Drehachse (3.2) des Türmechanismus (3) verläuft.

4. Schwenkmechanismus gemäß Anspruch 1, **dadurch gekennzeichnet, dass** das Türmechanismus (3) eine Schwenkarretierung (3.3) besitzt.

5. Schwenkmechanismus gemäß Anspruch 4, **dadurch gekennzeichnet, dass** die Schwenkarretierung (3.3) eine stufenweise Arretierung des Türelements (3.1) ermöglicht.

6. Schwenkmechanismus gemäß Anspruch 1, **dadurch gekennzeichnet, dass** der Türmechanismus (3) zumindest ein Absperrelement (3.4), welches bevorzugt aus Rohrsegmenten (3.5) bestehend, besitzt.

7. Schwenkmechanismus gemäß Anspruch 1, **dadurch gekennzeichnet, dass** der Türmechanismus (3) zumindest einen Ferkelschutz (3.6) besitzt.

8. Schwenkmechanismus gemäß Anspruch 1, **dadurch gekennzeichnet, dass** der Ausleger (2.1) eine Öffnung (2.4) besitzt, durch welche die Drehachse (3.2) des Türmechanismus (3) verläuft.

9. Schwenkmechanismus gemäß Anspruch 1, **dadurch gekennzeichnet, dass** am Türelement (3.1) ein verklappbares oder verschwenkbares Abstandssegment (3.7) angeordnet ist.

10. Verwendung des Schwenkmechanismus (1) gemäß zumindest einem der Ansprüche 1 bis 9 für eine Freilaufbox, eine Jungtieraufzuchtbox, nämlich für Ferkel, Kälber und junge Ziegen, oder einen Jungtierbehandlungsstand in der Massentierhaltung oder dem ökologischen Landbau.

11. Verwendung des Schwenkmechanismus gemäß 10, wobei zumindest zwei Schwenkmechanismen (1) angeordnet sind.

12. Verwendung des Schwenkmechanismus gemäß 11, wobei die zumindest zwei Schwenkmechanismen (1) durch zumindest ein Verbindungselement (4), starr und/oder flexibel, verbindbar sind.

## Claims

1. Pivoting mechanism for animal boxes, this pivoting mechanism (1) comprising at least one fastening frame (2) with a base axis (2.2) on which at least one arm (2.1) Is arranged, and a door mechanism (3) which has at least one door element (3.1) with an axis of rotation (3.2), with this axis of rotation (3.2) being parallel to the base axis (2.2), and the door mechanism (3) being arranged pivotably on the fastening frame (2), **characterized in that** two parts of the door element (3.1) are arranged opposite one another on the axis of rotation (3.2) and relative to the longitudinal axis of the axis of rotation (3.2), with each of these two parts of the door element (3.1) having an extent which is smaller than the distance between the base axis (2.2) and the axis of rotation (3.2).

2. Pivoting mechanism according to claim 1, **characterized in that** the mounting frame (2) has a guide arm (2.3) on which the door mechanism (3) is hinged pivotably.

3. Pivoting mechanism according to claim 2, **characterized in that** the guide arm (2.3) has a guide opening (2.5) through which the axis of rotation (3.2) of the door mechanism (3) is routed.

4. A pivoting mechanism according to claim 1, **characterized in that** the door mechanism (3) has a pivoting lock (3.3).

5. Pivoting mechanism according to claim 4, **characterized in that** the pivoting locking device (3.3) enables the door element (3.1) to be locked in a stepwise manner.

6. Pivoting mechanism according to claim 1, **characterized in that** the door mechanism (3) has at least one locking element (3.4) which preferably consists of tube segments (3.5).

7. Pivoting mechanism according to claim 1, **characterized in that** the door mechanism (3) has at least one piglet protection (3.6).

8. Pivoting mechanism according to claim 1, **characterized in that** the guide arm (2.1) has a guide opening (2.4) through which the axis of rotation (3.2) of the door mechanism (3) is routed.

9. Pivoting mechanism according to claim 1, **characterized in that** a foldable or pivotable spacer segment (3.7) is arranged on the door element (3.1).

10. Use of the pivoting mechanism (1) according to at least one of claims 1 to 9 for a free-wheeling box, a young animal rearing box, namely for piglets, calves and young goats, or a young animal treatment station In bulk animal husbandry or organic farming.

11. Use of the pivoting mechanism according to 10, wherein at least two pivoting mechanisms (1) are arranged.

12. Use of the pivoting mechanism according to 11, wherein at least two pivoting mechanisms (1) are correctable, rigid and/or flexible, by at least one connecting element (4).

## Revendications

1. Mécanisme pivotant pour cages,
ce mécanisme pivotant (1) comprenant au moins cadre de fixation (2) ayant un axe de base (2.2) sur lequel est disposé au moins une flèche (2.1), et un mécanisme de porte (3), qui présente au moins un élément de porte (3.1) avec un axe de rotation (3.2), sachant que cet axe de rotation (3.2) est disposé parallèlement à l'axe de base (2.2) et
le mécanisme de porte (3) étant disposé de manière pivotante sur le cadre de fixation (2), **caractérisé en ce que** deux parties de l'élément de porte (3.1) sont disposées l'une en face de l'autre sur l'axe de rotation (3.2) et par rapport à l'axe longitudinal de l'axe de rotation (3.2), chacune desdites deux parties de l'élément de porte (3.1) ayant un allongement inférieur à la distance entre l'axe de base (2.2) et l'axe de rotation (3.2).

2. Mécanisme pivotant selon la revendication 1, **caractérisé en ce que** le cadre de fixation (2) dispose d'un bras de guidage (2.3) sur lequel le mécanisme de porte (3) est pivoté.

3. Mécanisme pivotant selon la revendication 2, **caractérisé en ce que** le bras de guidage (2.3) dispose d'une ouverture de guidage (2.5) à travers laquelle passe l'axe de rotation (3.2) du mécanisme de porte (3).

4. Mécanisme pivotant selon la revendication 1, **caractérisé en ce que** le mécanisme de porte (3) dispose d'un dispositif de verrouillage (3.3).

5. Mécanisme pivotant selon la revendication 4, **caractérisé en ce que** le dispositif de verrouillage (3.3) permet de verrouiller l'élément de porte (3.1) par étapes.

6. Mécanisme pivotant selon la revendication 1, **caractérisé en ce que** le mécanisme de porte (3) présente au moins un élément de verrouillage (3.4) constitué de préférence de segments de tube (3.5).

7. Mécanisme pivotant selon la revendication 1, **caractérisé en ce que** le mécanisme de porte (3) présente au moins une protection porcelet (3.6).

8. Mécanisme pivotant selon la revendication 1, **caractérisé en ce que** la flèche (2.1) dispose d'une ouverture (2.4) à travers laquelle passe l'axe de rotation (3.2) du mécanisme de porte (3).

9. Mécanisme pivotant selon la revendication 1, **caractérisé en ce qu'**un segment d'écartement (3.7) pliable ou pivotant est disposé sur l'élément de porte (3.1).

10. Utilisation du mécanisme pivotant (1) selon au moins l'une des revendications 1 à 9 pour une cage plein air, une cage d'élevage pour jeunes animaux, notamment pour porcelets, veaux et jeunes chèvres, ou pour une station de traitement pour jeunes animaux dans l'élevage Industriel ou dans l'agriculture biologique.

11. Utilisation du mécanisme pivotant selon 10, au moins deux mécanismes pivotants (1) étant disposés.

12. Utilisation du mécanisme pivotant selon 11, les deux mécanismes pivotants (1) au moins pouvant être reliés entre eux, de manière rigide et/ou flexible, par au moins un élément de connexion (4).
